(19) Europäisches Patentamt
European Patent Office
Office européen des brevets

(11) Veröffentlichungsnummer: **0 073 481**
**B1**

(12) # EUROPÄISCHE PATENTSCHRIFT

(45) Veröffentlichungstag der Patentschrift: **30.01.85**

(51) Int. Cl.$^4$: **C 09 B 62/45**, D 06 P 3/10, D 06 P 3/66

(21) Anmeldenummer: **82107846.6**

(22) Anmeldetag: **26.08.82**

(54) **Wasserlösliche Azoverbindungen, Verfahren zu ihrer Herstellung und ihre Verwendung als Farbstoffe.**

(30) Priorität: **31.08.81 DE 3134357**

(43) Veröffentlichungstag der Anmeldung: **09.03.83 Patentblatt 83/10**

(45) Bekanntmachung des Hinweises auf die Patenterteilung: **30.01.85 Patentblatt 85/05**

(84) Benannte Vertragsstaaten: **CH DE FR GB IT LI**

(56) Entgegenhaltungen:
**CH-A- 495 464**
**DE-A- 1 911 427**
**GB-A- 2 074 599**

(73) Patentinhaber: **HOECHST AKTIENGESELLSCHAFT**
**Postfach 80 03 20**
**D-6230 Frankfurt am Main 80 (DE)**

(72) Erfinder: **Mischke, Peter, Dr.**
**Eichhornweg 2**
**D-6232 Bad Soden am Taunus (DE)**
Erfinder: **Schläfer, Ludwig, Dr.**
**Königsberger Strasse 40**
**D-6233 Kelkheim (Taunus) (DE)**

**EP 0 073 481 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der wasserlöslichen Azofarbstoffe, die faserreaktive Eigenschaften besitzen.

Aus der japanischen Patentbekanntmachung Sho-45-10789 und der deutschen Offenlegungsschrift 19 11 427 sind bereits Azofarbstoffe bekannt, die eine 1,3-Diaminobenzol-4-sulfonsäure als Kupplungskomponente enthalten. Diese besitzen jedoch gewisse Mängel, insbesondere bezüglich der Echtheiten von mit ihnen hergestellten Färbungen.

Mit der vorliegenden Erfindung wurden nunmehr neue wasserlösliche Azoverbindungen gefunden, die der allgemeinen Formel (1)

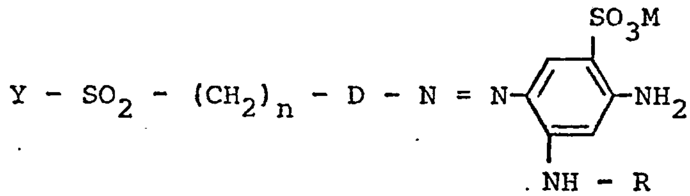 (1)

entsprechen. In dieser allgemeinen Formel (1) bedeuten :

D ist der Phenylenrest, der weiterhin durch einen oder zwei Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor und Carboxy und/oder durch eine Nitrogruppe und/oder durch eine weitere Gruppe der Formel $Y—SO_2—(CH_2)_n—$, in welcher Y die nachstehende Bedeutung hat und n hier die Zahl 1 oder 2 ist, substituiert sein kann, oder

D ist der Naphthylenrest, der weiterhin durch einen oder zwei Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor, Carboxy und Sulfo und/oder durch eine Nitrogruppe substituiert sein kann, oder

D ist der Benzthiazol-2-yl-Rest, der im carbocyclischen Ring die angegebene Gruppe der Formel $Y—SO_2—(CH_2)_n—$ gebunden enthält und in diesem Benzolkern weiterhin durch einen Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Nitro, Chlor, Brom und Sulfo substituiert sein kann ;

M ist ein Wasserstoffatom oder das Äquivalent eines Metalls, vorzugsweise eines Alkalimetalls oder eines Erdalkalimetalls, wie insbesondere des Natriums, Kaliums oder Calciums ;

R ist der Acylrest einer gegebenenfalls substituierten niederen Alkancarbonsäure, einer gegebenenfalls substituierten niederen Alkencarbonsäure, einer gegebenenfalls substituierten aromatischen Carbonsäure, einer gegebenenfalls substituierten niederen Alkansulfonsäure, einer gegebenenfalls substituierten aromatischen Sulfonsäure oder der gegebenenfalls substituierten Carbaminsäure oder einer niederen Alkensulfonsäure ;

Y ist die Vinylgruppe oder eine Gruppe der Formel $—CH_2—CH_2—Z$, in welcher Z einen anorganischen oder organischen, alkalisch eliminierbaren Rest oder die Hydroxygruppe bedeutet ;

n steht für die Zahl Null, 1 oder 2.

Der Formelrest D ist bevorzugt ein Phenylenrest, der unsubstituiert oder durch 1 oder 2 Substituenten aus der Gruppe niederes Alkyl, wie Äthyl und insbesondere Methyl, niederes Alkoxy, wie Äthoxy und insbesondere Methoxy, und Chlor oder durch ein Bromatom substituiert ist, oder ist bevorzugt ein Naphtylenrest, der unsubstituiert oder durch eine oder zwei, bevorzugt eine, Sulfogruppe substituiert ist.

Der obengenannte Acylrest für das Formelglied R ist bevorzugt eine niedere Alkanoylgruppe, die durch Chlor, Brom, niederes Alkoxy, wie Methoxy und Äthoxy, Phenoxy, Phenyl, Hydroxy, Carboxy oder Sulfo substituiert sein kann, wie beispielsweise die Formyl-, Acetyl-, Propionyl-, Chloracetyl-, Chlorpropionyl-, Butyryl-, Isobutyryl-, Phenylacetyl- oder Phenoxyacetyl-Gruppe, oder ist bevorzugt eine niedere Alkenoylgruppe, die durch Chlor, Brom, Carboxy oder Sulfo substituiert sein kann, wie beispielsweise der Monoacylrest der Maleinsäure, der Acryloylrest oder der α-Bromacryloylrest, oder ist bevorzugt eine niedere Alkylsulfonylgruppe, die durch Hydroxy, Sulfato, Chlor, Brom oder niederes Alkoxy, wie Methoxy oder Äthoxy, substituiert sein kann, wie beispielsweise die Methylsulfonyl-, Äthylsulfonyl-, β-Chlor- oder β-Bromäthylsulfonyl-, β-Sulfatoäthylsulfonyl-, β-Hydroxyäthylsulfonyl- oder β-Methoxyäthylsulfonyl-Gruppe, oder ist bevorzugt die Benzoylgruppe, die durch Substituenten aus der Gruppe Chlor, Sulfo, niederes Alkyl, wie Methyl und Äthyl, niederes Alkoxy, wie Methoxy und Äthoxy, Hydroxy und Carboxy substituiert sein kann, oder ist bevorzugt die Phenylsulfonylgruppe, die durch Substituenten aus der Gruppe niederes Alkyl, wie Methyl und Äthyl, niederes Alkoxy, wie Methoxy und Äthoxy, Chlor, Sulfo und Carboxy substituiert sein kann, wie beispielsweise die p-Tosyl-Gruppe, oder ist bevorzugt die Gruppe der Formel $—CO—NH_2$, die am Stickstoffatom durch niederes Alkyl, wie Methyl, Äthyl, Propyl, Isopropyl und

Butyl, durch Cycloalkyl, wie Cyclohexyl, oder durch eine gegebenenfalls substituierte Arylgruppe, wie die Phenylgruppe, die bevorzugt durch Substituenten aus der Gruppe Chlor, Sulfo, niederes Alkyl, niederes Alkoxy und Carboxy substituiert sein kann, mono- oder disubstituiert sein kann, oder ist die Vinylsulfonylgruppe.

Insbesondere bevorzugt ist als Formelglied R die Acetyl-, Propionyl- oder Benzoylgruppe.

Die Angabe « niedere » bedeutet im vorstehenden wie im folgenden, daß die in den jeweiligen Gruppen enthaltenen Alkyl- oder Alkylen- oder Alkenylreste solche von 1 bis 6 C-Atomen, bevorzugt von 1 bis 4 C-Atomen, sind.

Alkalisch eliminierbare Gruppen Z sind beispielsweise Halogenatome, wie das Chlor-, Brom- oder Fluoratom, Estergruppen organischer Carbon- und Sulfonsäuren, wie ein niederer Alkanoyloxyrest, beispielsweise der Acetoxyrest, oder ein Acyloxyrest einer aromatischen Carbon- oder Sulfonsäure, wie der Benzoyloxy-, Sulfobenzoyloxy-, Benzolsulfonyloxy- oder Toluolsulfonyloxyrest, des weiteren beispielsweise die Monoestergruppen der Phosphorsäure oder insbesondere der Schwefelsäure oder der Thioschwefelsäure entsprechend den Formeln $—OPO_3M_2$ bzw. $—OSO_3M$ bzw. $—S—SO_3M$ mit M jeweils der oben angegebenen Bedeutung, ebenso die niederen Alkylsulfonylamino- und Arylsulfonylaminogruppen, die Phenoxygruppe, die Dialkylaminogruppen mit Alkylgruppen von jeweils 1 bis 4 C-Atomen, wie die Dimethylamino- und Diäthylaminogruppe.

Die neuen Azoverbindungen können sowohl in Form der freien Säure als auch in Form ihrer Salze vorliegen. Bevorzugt sind sie in Form der Salze, insbesondere der Alkali- und Erdalkalimetallsalze, hiervon insbesondere die Natrium-, Kalium- und auch Calciumsalze. Die neuen Azoverbindungen finden bevorzugt in Form dieser Salze, bevorzugt der Alkalimetallsalze, Verwendung zum Färben und Bedrucken von aus hydroxy- oder carbonamidgruppenhaltigen Materialien, insbesondere Fasermaterialien.

Von den erfindungsgemäßen Monoazoverbindungen können insbesondere diejenigen hervorgehoben werden, die der allgemeinen Formel (1a)

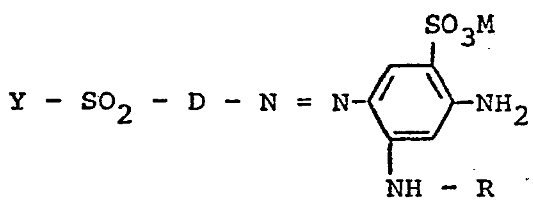

(1a)

entsprechen, in welcher M und Y die obengenannten Bedeutungen besitzen, Y bevorzugt hierbei die Vinylgruppe oder die β-Sulfatoäthyl-Gruppe ist, R für die Acetyl- oder Propionylgruppe steht und D ein Phenylenrest ist, der durch einen oder zwei Substituenten substituiert sein kann, die aus der Gruppe Methyl, Äthyl, Methoxy, Äthoxy, Chlor und Brom ausgewählt sind, oder den Naphthylenrest bedeutet, der unsubstituiert oder durch eine Sulfogruppe substituiert ist.

Unter den Verbindungen der Formel (1), in der n = Null ist, und den Verbindungen der Formel (1a) sind besonders die Verbindungen bevorzugt, in denen D der p-Phenylenrest ist, des weiteren die Verbindungen der allgemeinen Formel (1b)

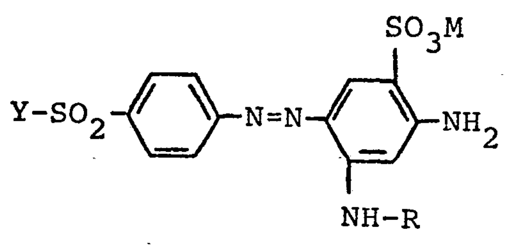

(1b)

in welcher R für die Acetyl- oder Propionylgruppe steht und M und Y die oben genannten Bedeutungen haben.

Die vorliegende Erfindung betrifft weiterhin Verfahren zur Herstellung der obengenannten und definierten Azoverbindungen der allgemeinen Formel (1). Diese Verbindungen können erfindungsgemäß hergestellt werden, indem man eine Verbindung der allgemeinen Formel (2)

$$Y—SO_2—(CH_2)_n—D—NH_2 \qquad (2)$$

in welcher D, n und Y die obengenannten Bedeutungen haben, diazotiert und mit einer Kupplungskomponente der allgemeinen Formel (3)

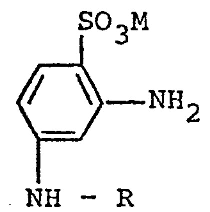

(3)

in welcher R und M die oben genannten Bedeutungen haben, zu einer Azoverbindung der allgemeinen Formel (1) kuppelt und gegebenenfalls im Falle, daß Y für die β-Hydroxyäthyl-Gruppe steht, die Azoverbindung der Formel (1) mit dieser β-Hydroxyäthylgruppe mit Hilfe eines Sulfatierungsmittels in die entsprechende Azoverbindung der Formel (1), in welcher Y für die β-Sulfatoäthyl-Gruppe steht, oder mit einem Phosphatierungsmittel in die entsprechende Verbindung der Formel (1), in welcher Y für die β-Phosphatoäthyl-Gruppe steht, überführt.

Geeignete Sulfatierungsmittel sind beispielsweise 90 bis 100 %ige Schwefelsäure, Chlorsulfonsäure, Amidosulfonsäure oder andere Schwefeltrioxid abgebende Verbindungen. Geeignete Phosphatierungsmittel sind beispielsweise konzentrierte Phosphorsäure, Pyro-, Meta- oder Polyphosphorsäure, Polyphosphorsäurealkylester, Phosphoroxychlorid oder Gemische aus Phosphorsäure und Phosphor(V)-oxid.

Aromatische Amine der allgemeinen Formel (2), die als Diazokomponenten zur Herstellung der erfindungsgemäßen Verbindungen dienen, sind beispielsweise insbesondere folgende :

4-β-Sulfatoäthylsulfonyl-anilin, 4-β-Chloräthylsulfonylanilin, 4-β-Phosphatoäthylsulfonyl-anilin, 4-Vinylsulfonylanilin, 4-β-Thiosulfatoäthylsulfonyl-anilin, 2-Brom-4-β-sulfatoäthylsulfonyl-anilin, 2-Chlor-4-β-sulfatoäthylsulfonyl-anilin, 2-Chlor-5-β-chloräthylsulfonyl-anilin, 3-β-Sulfatoäthylsulfonyl-anilin, 2-Brom-5-β-sulfatoäthylsulfonyl-anilin, 2,6-Dichlor-4-β-sulfatoäthylsulfonyl-anilin, 2,6-Dibrom-4-β-sulfatoäthylsulfonyl-anilin, 2,5-Dichlor-4-β-sulfatoäthylsulfonyl-anilin, 2-Methyl-5-β-sulfatoäthylsulfonyl-anilin, 2-Methoxy-5-β-sulfatoäthylsulfonyl-anilin, 2-Methoxy-4-β-sulfatoäthylsulfonyl-anilin, 2-Methyl-6-chlor-4-β-sulfatoäthylsulfonyl-anilin, 2,6-Dimethyl-4-β-sulfatoäthylsulfonyl-anilin, 2,6-Dimethyl-3-β-sulfatoäthylsulfonyl-anilin, 2,5-Dimethoxy-4-β-sulfatoäthylsulfonyl-anilin, 2-Methoxy-5-methyl-4-β-sulfatoäthylsulfonyl-anilin, 2-Nitro-4-β-sulfatoäthylsulfonyl-anilin, 4-Nitro-2-β-sulfatoäthylsulfonyl-anilin, 6-β-Sulfatoäthylsulfonyl-2-naphthylamin, 1-Sulfo-6-β-sulfatoäthylsulfonyl-2-naphthylamin, 8-β-Sulfatoäthylsulfonyl-2-naphthylamin, 6-Sulfo-8-β-sulfatoäthylsulfonyl-2-naphthylamin, 6-β-Vinylsulfonyl-2-aminobenzthiazol, 6-β-Sulfatoäthylsulfonyl-2-aminobenzthiazol, 4-ω-(β-Sulfatoäthylsulfonyl)-tolylamin, 3-ω-(β-Sulfatoäthylsulfonyl)-tolylamin, 6-Methoxy-3-ω-(β-sulfatoäthylsulfonyl)-totylamin, 4-Methoxy-3-ω-(β-sulfatoäthylsulfonyl)-tolylamin, 4-Methyl-3,5-bis-(β-sulfatoäthylsulfonylmethyl)-anilin, 4-ω-(β-Sulfatoäthylsulfonyl)-äthyl-anilin, 3-ω-(β-Sulfatoäthylsulfonyl)-äthyl-anilin, 5-(β-Sulfatoäthylsulfonylmethyl)-1-naphthylamin oder deren β-Hydroxyäthylsulfonyl- oder bspw. β-Chlor-, β-Acetoxy- und β-Phosphatoäthylsulfonyl- oder Vinylsulfonyl-Abkömmlinge. Die Verbindungen der Formel (2) sind bekannt und lassen sich in der in der Literatur vielfach beschriebenen Weise herstellen. Beispielsweise erhält man die bevorzugten Verbindungen der Formel (2) mit einer β-Sulfatoäthylsulfonylgruppe aus den entsprechenden β-Hydroxyäthylsulfonyl-Verbindungen durch Veresterung, wie beispielsweise in der deutschen Patentschrift 1 150 163 oder in der deutschen Patentschrift 1 443 877 beschrieben. Die so hergestellten β-Sulfatoäthylsulfonyl-Verbindungen der Formel (2) können direkt, ohne Zwischenisolierung aus dem Veresterungsansatz, in das erfindungsgemäße Herstellungsverfahren der Synthese der Verbindungen der Formel (1) eingesetzt werden.

Die zur Synthese der Verbindungen der allgemeinen Formel (1) als Kupplungskomponenten dienenden Verbindungen der allgemeinen Formel (3) können ebenfalls in bekannter Weise hergestellt werden, so beispielsweise durch Monoacylierung von 1,3-Diamino-benzol-4-sulfonsäure mit einem entsprechenden Säurechlorid oder Säureanhydrid des Formelrestes R.

Verbindungen der allgemeinen Formel (3) sind beispielsweise : 3-Amino-acetanilid-4-sulfonsäure, 3-Amino-chloracetanilid-4-sulfonsäure, 3-Amino-propionylamino-benzol-4-sulfonsäure, 3-Amino-β-chlorpropionylamino-benzol-4-sulfonsäure, 3-Amino-β-sulfopropionylamino-benzol-4-sulfonsäure, 3-Amino-acryloylamino-benzol-4-sulfonsäure, 3-Amino-isobutyrylamino-benzol-4-sulfonsäure, 3-Amino-α-bromacryloylamino-benzol-4-sulfonsäure, 3-Amino-phenylacetylamino-benzol-4-sulfonsäure, 3-Amino-methoxyacetylamino-benol-4-sulfonsäure, 3-Aminosuccinylamino-benzol-4-sulfonsäure, 3-Amino-β-carboxyacryloylamino-benzol-4-sulfonsäure, 3-Amino-phenoxyacetylaminobenzol-4-sulfonsäure, 3-Amino-benzoylamino-benzol-4-sulfonsäure, 3-Amino-4′-methylbenzoylamino-benzol-4-sulfonsäure, 3-Amino-3′-chlorbenzoylamino-benzol-4-sulfonsäure, 3-Amino-2′-methoxybenzoylamino-benzol-4-sulfonsäure, 3-Amino-2′-carboxybenzoylamino-benzol-4-sulfonsäure, 3-Amino-3′-sulfobenzoylamino-benzol-4-sulfonsäure, 3-Amino-methansulfonylamino-benzol-4-sulfonsäure, 3-Amino-äthansulfonylaminobenzol-4-sulfonsäure, 3-Amino-β-hydroxyäthylsulfonylamino-benzol-4-sulfonsäure, 3-Amino-vinylsulfonylamino-benzol-4-sulfonsäure, 3-Amino-β-sulfatoäthylsulfonylamino-benzol-4-sulfonsäure, 3-Amino-β-bromäthylsulfonylamino-benzol-4-sulfonsäure, 3-Amino-benzolsulfonylamino-benzol-4-sulfonsäure, 3-Amino-p-tosylamino-benzol-4-sulfonsäure, 3-Amino-ureidobenzol-4-sulfonsäure, 3-Amino-N′-isopropylureido-benzol-4-sulfonsäure, 3-Amino-N′-cyclohexylureido-benzol-4-sulfonsäure, 3-Amino-N′-phenylureido-

benzol-4-sulfonsäure, 3-Amino-N'-(4'-chlorphenyl)-ureido-benzol-4-sulfonsäure, 3-Amino-N'-(3',4'-dichlorphenyl)-ureido-benzol-4-sulfonsäure.

Die Diazotierung der Amine der allgemeinen Formel (2) kann nach allgemein bekannten Methoden, beispielsweise durch Einwirkung von Alkalinitrit und einer anorganischen Säure, wie Salzsäure, Schwefelsäure oder Phosphorsäure, oder durch Nitrosylschwefelsäure erfolgen.

Die Kupplung mit den Kupplungskomponenten der Formel (3) kann ebenfalls in an sich bekannter Weise in neutralem bis saurem Milieu, bevorzugt in einem pH-Bereich zwischen 1 und 5, vorzugsweise zwischen 2,5 und 4, und bei einer Temperatur zwischen – 5 °C und + 25 °C, gegebenenfalls in Gegenwart von Natriumacetat oder ähnlichen, die Kupplungsgeschwindigkeit beeinflussenden Puffersubstanzen oder Katalysatoren, wie beispielsweise Dimethylformamid oder Pyridin, vorgenommen werden.

Die erfindungsgemäß hergestellten Verbindungen der Formel (1) können durch Aussalzen mittels Elektrolyten, beispielsweise Natriumchlorid oder Kaliumchlorid, vorteilhaft nach Einstellung des Reaktionsgemisches auf einen pH-Wert von 3,5 bis 7,0, aus der Reaktionslösung abgeschieden werden ; nach Filtration werden sie getrocknet. Weiterhin lassen sich die erfindungsgemäßen Verbindungen aus ihren Syntheseansätzen durch Eindampfen oder Sprühtrocknen isolieren. Es ist auch möglich, die nach der Synthese erhaltenen Lösungen der Verbindungen der Formel (1), gegebenenfalls nach Zusatz von Puffersubstanzen, direkt als Flüssigpräparation der färberischen Verwendung zuzuführen.

Die neuen Verbindungen der Formel (1) eignen sich als Farbstoffe, insbesondere als faserreaktive Farbstoffe ; sie lassen sich bevorzugt auf den nachgenannten Substraten nach den für Reaktivfarbstoffe bekannten Anwendungsverfahren applizieren und echt fixieren.

Gegenstand der vorliegenden Erfindung ist somit auch die Verwendung der Verbindungen der Formel (1) als Farbstoffe zum Färben und Bedrucken der anfangs erwähnten Materialien, insbesondere von Materialien aus Cellulosefasern und/oder natürlichen und/oder synthetischen Polyamidfasern oder von Leder bzw. ein Verfahren zum Färben und Bedrucken der genannten Materialien, so von Cellulosefasermaterialien oder natürlichen oder synthetischen Polyamidfasermaterialien oder von Leder, unter Verwendung der Verbindungen der Formel (1). Als Cellulosefasermaterialien sind Baumwolle und regenerierte Cellulose, wie Viskoseseide, sowie Leinen, Hanf und Jute bevorzugt. Geeignete Polyamidfasermaterialien sind insbesondere Wolle und andere Tierhaare sowie Seide, von den synthetischen Polyamiden insbesondere Polyamid-6,6, Polyamid-6, Polyamid-11 oder Polyamid-4.

Beispielsweise erhält man mit den erfindungsgemäßen Azoverbindungen auf Cellulosefasern nach dem Ausziehverfahren unter Verwendung verschiedenster Alkalizusätze aus langer Flotte Färbungen mit sehr guter Farbausbeute. Mit ebenfalls ausgezeichneten Farbausbeuten färben sie Cellulosefasern nach den bekannten Klotzverfahren, wobei die Verbindung (1) mittels Alkali durch Verweilen bei Raumtemperatur, durch Dämpfen oder mit Trockenhitze fixiert werden kann. Bei den Druckverfahren können ebenfalls die üblichen einphasigen Verfahren in Anwesenheit eines säurebindenden Mittels oder alkalispendenden Mittels, wie beispielsweise Natriumbicarbonat, Natriumcarbonat oder Natriumtrichloracetat, in der Druckpaste mit anschließendem Fixieren durch Dämpfen, beispielsweise bei 101 bis 103 °C, oder die zweiphasigen Verfahren unter Verwendung neutraler oder schwach saurer Druckpasten, nach deren Druck das Fasermaterial entweder durch ein heißes elektrolythaltiges alkalisches Bad geführt oder aber mit einer alkalischen elektrolythaltigen Klotzflotte überklotzt und der Farbstoff der Formel (1) danach durch Dämpfen oder Trockenhitze fixiert wird, verwendet werden. Man erhält mit diesen Verfahren farbstarke Drucke mit gutem Stand der Konturen und einem klaren Weißfond. Die Qualität der Drucke wird von wechselnden Fixierbedingungen praktisch nicht beeinflußt, und sie zeigen somit eine befriedigende Nuancenkonstanz.

Die erfindungsgemäßen Verbindungen zeichnen sich gegenüber den konstitutionell nächstvergleichbaren Farbstoffen der japanischen Patentbekanntmachung Sho-45-10789 und der DE-OS 19 11 427 durch klarere Nuancen, erheblich bessere Licht- und Säureechtheiten, bessere Schweiß- und saure Überfärbeechtheiten aus ; ihre Nuancen sind ebenso unempfindlich bei der Knitterfestausrüstung des gefärbten oder bedruckten Gewebes.

Die mit den Verbindungen der Formel (1) erhaltenen Färbungen oder Drucke auf Cellulosefasermaterialien besitzen beachtliche Echtheiten ; hiervon sind insbesondere die wichtigsten Fabrikations- und Gebrauchsechtheiten hervorzuheben, wie die Lichtechtheiten auf feuchtem und trockenem Fasermaterial, die Waschechtheit bei 60 °C und 95 °C, die Sodakochechtheit, die saure und alkalische Walkechtheit, die Wasserechtheit, die Seewasserechtheit, die saure Überfärbeechtheit, die alkalische und saure Schweißechtheit, die Plissier-, Bügel- und Reibechtheit sowie die Chlorbadewasser- und die Abgasechtheit. Kupfersalze verändern auch in Gegenwart von peroxidhaltigen Waschmitteln die Nuance der Färbungen und Drucke nicht. Ebenso wird die Nuance durch eine Kunstharzausrüstung nicht verändert.

Sowohl die natürlichen als auch die synthetischen Polyamidfasermaterialien werden mit den neuen Verbindungen der Formel (1) bevorzugt aus saurem, wäßrigem Färbebad oder saurer, wäßriger Färbeflotte gefärbt. Vorzugsweise wird der gewünschte pH-Wert des Färbebades oder der Färbeflotte mit Essigsäure oder Essigsäure und Ammoniumacetat oder Natriumacetat eingestellt. Um eine gute Egalität der Färbungen zu erreichen oder deren Egalität zu verbessern, ist es vorteilhaft, übliche Egalisierhilfsmittel, beispielsweise Verbindungen auf Basis eines Umsetzungsproduktes von einem Fettamin, wie beispielsweise Stearylamin, mit einem Alkylenoxid, wie Äthylenoxid, oder eines Umsetzungsproduktes von Cyanurchlorid mit der etwa 3-fach molaren Menge einer Aminobenzolsulfonsäure und/oder einer

Aminonaphthalinsulfonsäure, im Färbebad oder der Färbeflotte mitzuverwenden. Die Färbungen können üblicherweise bei Temperaturen von 60 bis 100 °C, vorzugsweise im Ausziehverfahren, insbesondere bei Siedetemperatur des Färbebades, oder auch in einem Druckfärbeapparat bei Temperaturen von etwa 110 bis 120 °C ausgeführt werden.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Die in den nachstehenden Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

## Beispiel 1

28,1 Teile 4-β-Sulfatoäthylsulfonyl-anilin werden unter Rühren in 300 Teile Wasser eingetragen ; sodann gibt man 36 Teile 31 %ige Salzsäure zu und Kühlt die Suspension auf etwa 5 °C ab. Bei dieser Temperatur läßt man langsam 20 Volumenteile einer wäßrigen 5n-Natriumnitritlösung zutropfen und rührt etwa 1 bis 2 Stunden lang nach. Die überschüssige salpetrige Säure wird mit etwas Amidosulfonsäure zerstört.

Zur Kupplungsreaktion gibt man eine wäßrige Lösung von 23 Teilen 3-Amino-acetanilid-4-sulfonsäure hinzu und stellt den pH-Wert durch allmähliche Zugabe von Natriumbicarbonat auf etwa 4 ein. Nach beendigter Kupplung wird der pH-Wert auf 5,5 bis 6,0 gestellt und die entstandene Azoverbindung durch Sprühtrocknung der wäßrigen Lösung isoliert.

Es wird ein gelboranges, elektrolythaltiges Pulver erhalten, das das Natriumsalz der Verbindung der Formel

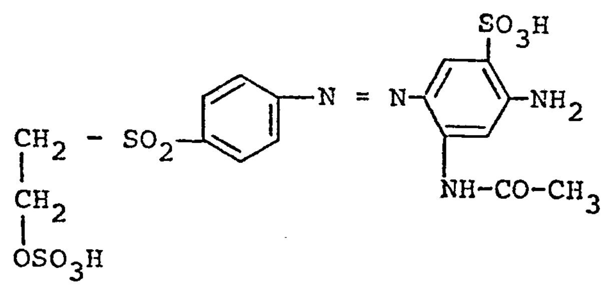

enthält. Diese besitzt sehr gute Farbstoffeigenschaften und eignet sich sehr gut zum Färben (einschließlich Bedrucken) von beispielsweise Cellulosefasern, wie Baumwolle, nach den für faserreaktive Farbstoffe üblichen Applikations- und Fixiermethoden ; sie liefert klare, goldgelbe Färbungen und Drucke mit guten Licht- und Naßechtheiten. Auf Wolle werden ebenfalls gute Färbungen und Drucke erhalten, die sich durch klare, goldgelbe Nuancen von hoher Farbstärke sowie durch sehr gute Licht- und Naßechtheiten auszeichnen.

## Beispiel 1a

Man verfährt in der im Beispiel 1 angegebenen Verfahrensweise zur Herstellung einer erfindungsgemäßen Azoverbindung setzt jedoch anstelle der dort verwendeten Kupplungskomponente 24,4 Teile 3-Amino-propionylamino-benzol-4-sulfonsäure ein. Man erhält nach Aufarbeitung des Syntheseansatzes das Natriumsalz der Verbindung der Formel

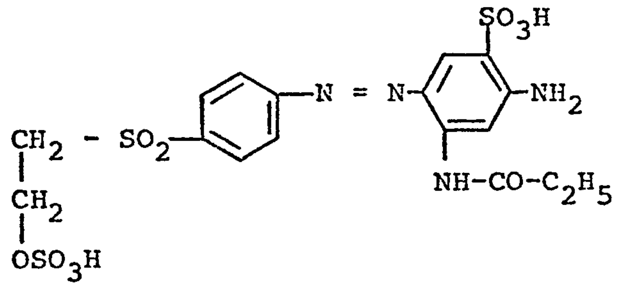

das ebenfalls einen wertvollen Farbstoff mit faserreaktiven Eigenschaften darstellt. Diese erfindungsgemäße Verbindung färbt nach den üblichen Applikations- und Fixiermethoden für faserreaktive Farbstoffe Cellulosefasermaterialien ebenfalls in klaren, goldgelben Tönen mit guten Licht- und Naßechtheiten. Ebenso liefert sie auf Wolle kräftige, egale Färbungen mit klarer, goldgelber Nuance und sehr guten Licht- und Naßechtheiten.

Beispiel 2

31,1 Teile 2-Methoxy-5-β-sulfatoäthylsulfonyl-anilin trägt man unter Rühren in 280 Teile Wasser ein ; nach Zugabe von 36 Teilen 31 %iger Salzsäure kühlt man die Suspension auf 5 °C ab. Bei dieser Temperatur läßt man langsam 20 Volumenteile einer wäßrigen 5n-Natriumnitritlösung zutropfen und rührt den Reaktionsansatz noch etwa eine Stunde nach. Überschüssige salpetrige Säure wird anschließend mit etwas Amidosulfonsäure zerstört.

Zur Durchführung der Kupplungsreaktion wird eine Lösung von 23 Teilen 3-Amino-acetanilid-4-sulfonsäure in etwa 150 Teilen Wasser zur obigen Diazoniumsalzlösung zugegeben, wobei der pH-Wert mittels Natriumbicarbonat auf etwa 4 eingestellt und gehalten wird. Nach beendigter Kupplung wird der pH-Wert auf 5,5 bis 6 erhöht und die entstandene erfindungsgemäße Azoverbindung durch Kaliumchlorid ausgefällt, abgesaugt und bei 60 °C unter reduziertem Druck getrocknet. (Man kann die Azoverbindung auch durch Sprühtrocknung der wäßrigen Lösung isolieren).

Es wird ein goldgelbes, elektrolythaltiges Pulver erhalten, das das Alkalimetallsalz, wie vorwiegend das Kaliumsalz (bzw. das Natriumsalz) der Formel

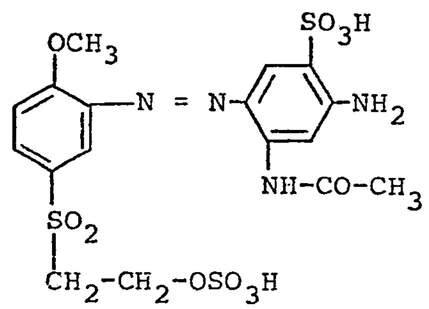

enthält. Die erfindungsgemäße Verbindung eignet sich hervorragend als Farbstoff und liefert nach den für faserreaktive Farbstoffe üblichen und bekannten Applikations- und Fixiermethoden auf Baumwolle und Wolle klare, wenig rotstichig gelbe Färbungen und Drucke mit sehr guten Echtheitseigenschaften, welche in der Beschreibung zuvor erwähnt sind.

Beispiel 2a

Man verfährt gemäß den in Beispiel 2 angegebenen Verfahrensweisen zur Herstellung einer erfindungsgemäßen Azoverbindung, ersetzt jedoch dort die Kupplungskomponente durch 24,4 Teile 3-Amino-propionylamino-benzol-4-sulfonsäure. Man erhält die entsprechende erfindungsgemäße Azoverbindung mit der Propionylaminogruppe in der Kupplungskomponente Diese erfindungsgemäße Verbindung zeigt ebenfalls sehr gute Farbstoffeigenschaften und liefert beispielsweise auf Baumwolle Färbungen und Drucke mit gleicher Nuance und eben solchen guten Echtheitseigenschaften.

Beispiel 3

36 Teile 4-β-Sulfatoäthylsulfonyl-2-brom-anilin werden in 200 Teilen Wasser unter Zugabe von 11,5 Teilen Natriumbicarbonat gelöst ; anschließend gibt man 20 Volumenteile einer wäßrigen 5n-Natriumnitritlösung hinzu. Diese Mischung wird nach Abkühlen auf 0 bis 5 °C in ein Gemisch aus 100 Teilen Eis und 36 Volumenteilen einer 31 %igen wäßrigen Salzsäure gegossen. Die entstehende Diazoniumverbindung fällt hierbei teilweise aus. Es wird noch eine Stunde lang bei 0 bis 5 °C weitergerührt und danach überschüssige salpetrige Säure mit etwas Amidosulfonsäure zerstört.

Zur Durchführung der Kupplungsreaktion gibt man diese Diazoniumsalzsuspension in kleinen Anteilen zu einer etwa 10 °C kalten Lösung von 23 Teilen 3-Amino-acetanilid-4-sulfonsäure in 200 Teilen Wasser ; durch Einstreuen von Natriumacetat hält man den pH-Wert der Kupplungslösung zwischen 4 und 5. Nach etwa 2 Stunden ist die Kupplungsreaktion beendet. Die gebildete erfindungsgemäße Azoverbindung wird durch Sprühtrocknung isoliert.

Man erhält ein bräunliches, elektrolythaltiges Pulver, das das Natriumsalz der Verbindung der Formel

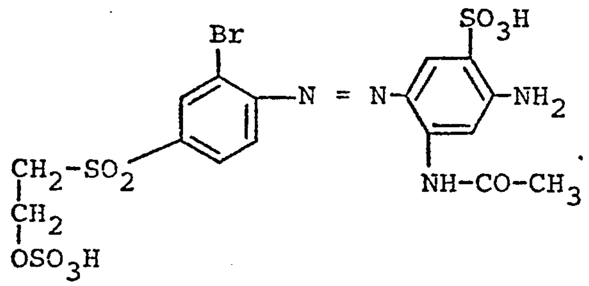

enthält. Diese zeigt sehr gute faserreaktive Farbstoffeigenschaften und liefert nach den für faserreaktive Farbstoffe üblichen Fixiermethoden auf Baumwolle und Wolle farbstarke, gelbstichig orange Färbungen und Drucke mit sehr guten Echtheitseigenschaften.

## Beispiel 4

34,1 Teile 1-Amino-2,5-dimethoxy-4-(β-sulfatoäthylsulfonyl)-benzol werden nach den Angaben des Beispieles 1 diazotiert und mit einer wäßrigen Lösung von 24,4 Teilen 3-Aminopropionylamino-benzol-4-sulfonsäure gekuppelt. Die entstandene erfindungsgemäße Azoverbindung wird durch Sprühtrocknung isoliert.

Man erhält ein rotbraunes, elektrolythaltiges Pulver, das das Natriumsalz der Verbindung der Formel

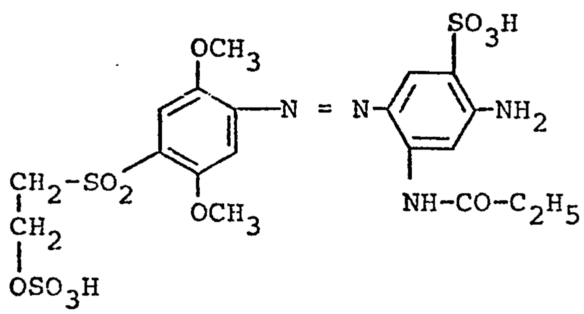

enthält, die sich sehr gut als faserreaktiver Farbstoff zum Färben (einschließlich Bedrucken) von Baumwolle und Wolle eignet ; sie liefert auf diesen Materialien goldorange Färbungen und Drucke mit guten Echtheitseigenschaften.

## Beispiel 5

Man verfährt gemäß der im Beispiel 1 angegebenen Verfahrensweise der Diazotierung und Kupplung, setzt jedoch anstelle der dort angegebenen Kupplungskomponente 32,1 Teile 3-Amino-α-bromacryloylamino-benzol-4-sulfonsäure ein. Nach beendigter Synthese wird die Reaktionslösung sprühgetrocknet. Man erhält ein orangebraunes, elektrolythaltiges Pulver, das das Natriumsalz der Verbindung der Formel

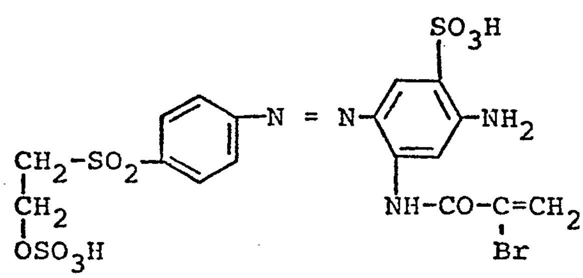

enthält. Diese erfindungsgemäße Azoverbindung liefert nach den für faserreaktive Farbstoffe üblichen Färbeweisen auf Baumwolle und Wolle goldgelbe Färbungen und Drucke mit sehr guten Licht- und Naßechtheitseigenschaften, wie beispielsweise den in der Beschreibung genannten Echtheiten.

## Beispiel 6

Man verfährt zur Herstellung einer erfindungsgemäßen Azoverbindung gemäß der im Beispiel 1 angegebenen Verfahrensweise, ersetzt jedoch die dort verwendete Kupplungskomponente durch 29,2 Teile 3-Amino-benzoylamino-benzol-4-sulfonsäure. Nach Isolierung der hergestellten Azoverbindung

durch Sprühtrocknung wird ein elektrolythaltiges gelbbraunes Pulver mit dem Natriumsalz der Verbindung der Formel

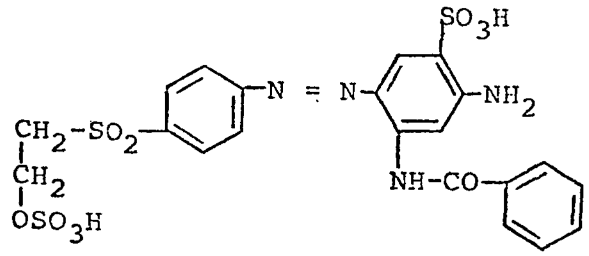

erhalten. Diese erfindungsgemäße Azoverbindung zeigt sehr gute faserreaktive Farbstoffeigenschaften und liefert in üblicher Weise auf Baumwolle und Wolle klare, rotstichig gelbe Färbungen und Drucke mit guter Lichtechtheit und sehr guter Beständigkeit gegenüber Waschbehandlungen.

Beispiel 7

Man verfährt gemäß der Verfahrensweise des Beispieles 1, ersetzt jedoch die dort verwendete Kupplungskomponente durch 34,2 Teile 3-Amino-p-tosylamino-benzol-4-sulfonsäure. Nach Isolierung erhält man das Natriumsalz der Verbindung der Formel

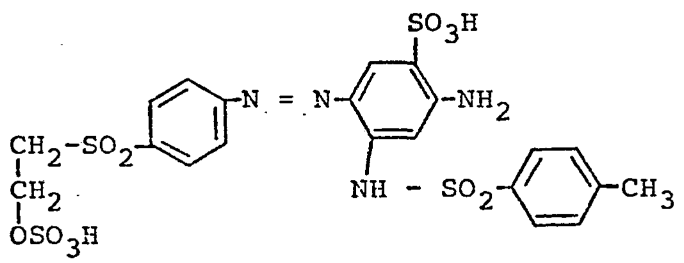

die auf Baumwolle und Wolle Färbungen und Drucke mit kräftiger rotstichig gelber Nuance und mit guten Echtheitseigenschaften liefert.

Beispiel 8

Eine neutral gestellte Lösung von 41,1 Teilen 2-Amino-8-(β-Sulfatoäthylsulfonyl)-naphthalin-6-sulfonsäure in etwa 260 Teilen Wasser wird mit 20 Volumenteilen einer wäßrigen 5n-Natriumnitritlösung versetzt. Diese Lösung gibt man langsam zu einem Gemisch aus 200 Teilen Eis und 35 Teilen einer 31 %igen wäßrigen Salzsäure; die Diazotierungsreaktion wird bei etwa 10 °C unter einstündigem Nachrühren fortgesetzt. Nach Beendigung wird überschüssige salpetrige Säure in üblicher Weise zerstört.

Zur Durchführung der Kupplungsreaktion gibt man eine gekühlte Lösung von 27,9 Teilen 3-Amino-β-chlorpropionylamino-benzol-4-sulfonsäure in 150 Teilen Wasser hinzu; die Reaktion wird bei einem pH-Wert von 5,5 bis 6 zu Ende geführt. Die hergestellte erfindungsgemäße Azoverbindung wird durch Sprühtrocknung isoliert.

Man erhält ein orangebraunes, elektrolythaltiges Pulver mit dem Natriumsalz der Verbindung der Formel

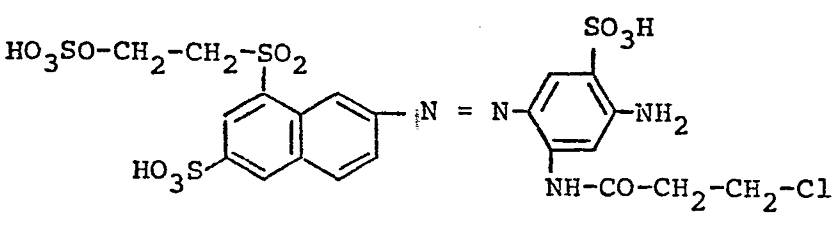

die nach den in der Technik üblichen Applikations- und Fixiermethoden für faserreaktive Farbstoffe auf Cellulosefasermaterialien, wie Baumwolle, und ebenso auf Wolle, farbstarke, gelbstichig orange Färbungen und Drucke mit guter Lichtechtheit und sehr guten Naßechtheitseigenschaften liefert.

Beispiel 9

Man verfährt zur Herstellung einer erfindungsgemäßen Verbindung gemäß der Verfahrensweise des Beispieles 1, ersetzt jedoch die dort verwendete Kupplungskomponente durch 27,3 Teile 3-Amino-N'-isopropylureido-benzol-4-sulfonsäure. Nach Isolierung der synthetisierten Azoverbindung durch Sprühtrocknung erhält man ein gelbbraunes, elektrolythaltiges Pulver, das das Natriumsalz der Verbindung der Formel

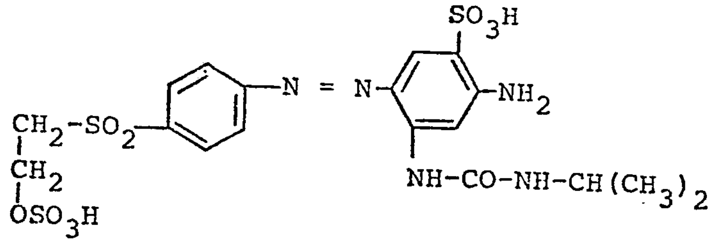

enthält und das auf Baumwolle und Wolle nach den für faserreaktive Farbstoffe üblichen Anwendungsmethoden auf Baumwolle und Wolle kräftige, goldorange Färbungen und Drucke mit guter Lichtechtheit und sehr guten Waschechtheitseigenschaften liefert.

Beispiel 10

Man verfährt gemäß der Verfahrensweise des Beispieles 2 zur Herstellung einer erfindungsgemäßen Azoverbindung, ersetzt jedoch die dort verwendete Kupplungskomponente durch 30,7 Teile 3-Amino-N'-phenylureido-benzol-4-sulfonsäure. Nach üblicher Aufarbeitung erhält man das Alkalimetallsalz, wie Natriumsalz, der Verbindung der Formel

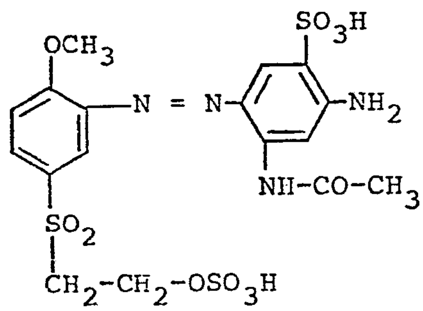

die gemäß den üblichen Anwendungstechniken auf Baumwolle und Wolle kräftige, rotstichig gelbe Färbungen und Drucke mit guten Echtheitseigenschaften liefert.

Beispiel 11

Man suspendiert 34,1 Teile 1-Amino-2,5-dimethoxy-4-(β-sulfatoäthylsulfonyl)-benzol in einem Gemisch aus 50 Teilen Wasser, 100 Teilen Eis und 9 Teilen konzentrierter Schwefelsäure und versetzt diese Suspension mit 18 Teilen einer wäßrigen, 40 %igen Natriumnitritlösung ; es wird noch 2 Stunden lang nachgerührt und sodann überschüssiges Nitrit mit etwas Amidosulfonsäure zerstört.

Zur Durchführung der Kupplungsreaktion gibt man 23 Teile 3-Amino-acetanilid-4-sulfonsäure hinzu, stellt das saure Kupplungsgemisch auf einen pH-Wert von 2 bis 3 mittels etwa 9 Teilen wasserfreiem Natriumcarbonat, hält die Kupplungstemperatur mit Eis unter 12 °C und rührt sodann noch einige Stunden bis zur Beendigung der Kupplung nach. Dann wird die Syntheselösung auf einen pH-Wert von 5 gestellt, der Ansatz geklärt und sprühgetrocknet.

Es wird ein braunrotes, elektrolythaltiges Pulver erhalten, das das Natriumsalz der Verbindung der Formel

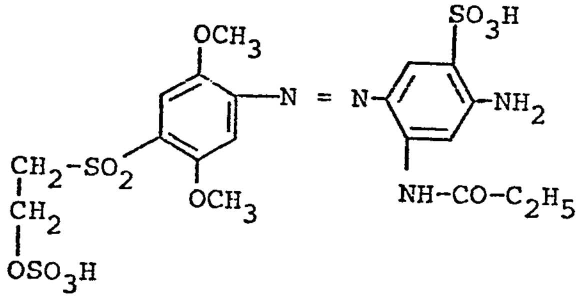

enthält. Diese zeigt ebenfalls sehr gute faserreaktive Farbstoffeigenschaften und ergibt nach den üblichen Anwendungstechniken auf Cellulosefasermaterialien gelbstichig orange Färbungen mit den in der Beschreibung genannten guten Echtheitseigenschaften.

Beispiel 12

Eine Suspension von 28,1 Teilen 1-Amino-4-(β-sulfatoäthylsulfonyl)-benzol in 100 Teilen Wasser, 100 Teilen Eis und 21 Teilen einer konzentrierter wäßrigen Salzsäure wird langsam mit einer wäßrigen Lösung von 7,5 Teilen Natriumnitrit versetzt; anschließend wird noch eine Stunde lang nachgerührt und überschüssiges Nitrit mit Amidosulfonsäure zerstört.

Zur Durchführung der Kupplungsreaktion versetzt man die so hergestellte Diazoniumsalzsuspension mit einer neutralen wäßrigen Lösung von 32,2 Teilen 3-Amino-4-sulfo-phenylharnstoff (diese kann gemäß bekannten Verfahrensweisen aus 18,8 Teilen 1,3-Diaminobenzol-4-sulfonsäure mit 8,7 Teilen Kaliumcyanat bei einem pH-Wert von 5 hergestellt werden). Das Kupplungsgemisch wird noch 3 bis 4 Stunden bei einem pH-Wert von 2,5 gerührt und der pH-Wert der Syntheselösung auf 4 bis 6 gestellt. Die erfindungsgemäße Azoverbindung wird durch Sprühtrocknung isoliert.

Man erhält ein gelbbraunes, elektrolythaltiges Pulver, das das Alkalimetallsalz, vorwiegend Natriumsalz, der Verbindung der Formel

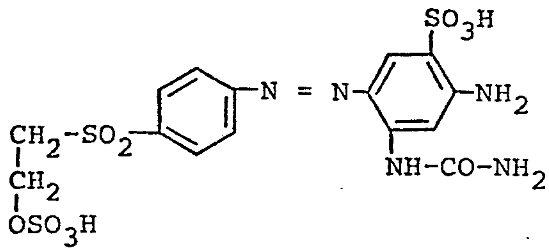

enthält, die gute faserreaktive Farbstoffeigenschaften besitzt, ein sehr gutes Ziehvermögen aus langen Flotten aufweist und nach üblichen Applikations- und Fixiermethoden für faserreaktive Farbstoffe auf Baumwolle Färbungen und Drucke mit rotstichig gelber Nuance und guten Licht- und Naßechtheitseigenschaften liefert.

Beispiele 13 bis 58

Die in den nachfolgenden Tabellenbeispielen durch ihre Diazokomponenten gemäß der allgemeinen Formel (2) und Kupplungskomponenten gemäß der allgemeinen Formel (3) charakterisierten erfindungsgemäßen Azoverbindungen der allgemeinen Formel (1) lassen sich ebenfalls in erfindungsgemäßer Weise, beispielsweise gemäß den Verfahrensweisen der obigen Ausführungsbeispiele, herstellen.

Diese erfindungsgemäßen Azoverbindungen zeigen ebenfalls sehr gute faserreaktive Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in den angegebenen Farbtönen auf Baumwolle.

(Siehe Tabelle, Seite 12 ff.)

| Bsp. | Diazokomponente entsprechend allg. Formel (2) | Kupplungskomponente entspr. allg. Formel (3) | Farbton auf Baumwolle |
|---|---|---|---|
| 13 | 4-ß-Sulfatoäthylsulfonyl-anilin | 3-Amino-acryloylamino-benzol 4-sulfonsäure | rotstichig gelb |
| 14 | dito | 3-Amino-isobutyrylamino-benzol-4-sulfonsäure | rotstichig gelb |
| 15 | dito | 3-Amino-3'-chlorbenzoyl-amino-benzol-4-sulfonsäure | gelbstichig orange |
| 16 | dito | 3-Amino-3'-sulfobenzoyl-amino-benzol-4-sulfonsäure | gelbstichig orange |
| 17 | dito | 3-Amino-methansulfonyl-amino-benzol-4-sulfonsäure | rotstichig gelb |
| 18 | dito | 3-Amino-ß-hydroxyäthylsulfonylamino-benzol-4-sulfonsäure | rotstichig gelb |
| 19 | dito | 3-Amino-benzolsulfonyl-amino-benzol-4-sulfonsäure | gelbstichig orange |
| 20 | dito | 3-Amino-chloracetanilid-4-sulfonsäure | rotstichig gelb |
| 21 | dito | 3-Amino-N'-cyclohexyl-ureido-benzol-4-sulfonsäure | gelbstichig orange |
| 22 | 4-Vinylsulfonyl-anilin | 3-Amino-ß-carboxyacryloyl-amino-benzol-4-sulfonsäure | rotstichig gelb |
| 23 | 4-ß-Phosphatoäthylsulfonyl-anilin | 3-Amino-propionylamino-benzol-4-sulfonsäure | rotstichig gelb |
| 24 | 2-Methoxy-5-ß-sulfato-äthylsulfonyl-anilin | 3-Amino-isobutyrylamino-benzol-4-sulfonsäure | gelb |
| 25 | dito | 3-Amino-N'-cyclohexyl-ureido-benzol-4-sulfonsäure | gelbstichig orange |
| 26 | dito | 3-Amino-p-tosylamino-benzol-4-sulfonsäure | rotstichig gelb |
| 27 | 2-Brom-4-ß-sulfatoäthyl-sulfonyl-anilin | 3-Amino-äthansulfonyl-amino-benzol-4-sulfonsäure | gelbstichig orange |
| 28 | dito | 3-Amino-N'-isopropyl-ureido-benzol-4-sulfonsäure | gelbstichig orange |
| 29 | 2,6-Dichlor-4-ß-sulfato-äthylsulfonyl-anilin | 3-Amino-acetanilid-4-sulfonsäure | gelbbraun |
| 30 | 3-ß-Sulfatoäthylsulfonyl-anilin | dito | gelb |

(Fortsetzung)

| Bsp. | Amin (2) | Verbindung (3) | Farbton |
|---|---|---|---|
| 31 | 2-Nitro-4-ß-sulfatoäthyl-sulfonyl-anilin | 3-Amino-acetanilid-4-sulfonsäure | rotstichig orange |
| 32 | 2-Carboxy-4-ß-sulfatoäthyl-sulfonyl-anilin | 3-Amino-benzoylamino-benzol-4-sulfonsäure | orange |
| 33 | 2-Methoxy-5-methyl-4-ß-sulfatoäthylsulfonyl-anilin | 3-Amino-benzolsulfonylamino-benzol-4-sulfonsäure | gelbstichig orange |
| 34 | 4-Methoxy-5-ß-sulfato-äthylsulfonyl-anilin | 3-Amino-propionylamino-benzol-4-sulfonsäure | rotstichig gelb |
| 35 | 2,5-Dimethoxy-4-ß-sulfato-äthylsulfonyl-anilin | 3-Amino-ureidobenzol-4-sulfonsäure | gelbstichig orange |
| 36 | 2-Carboxy-5-ß-sulfato-äthylsulfonyl-anilin | dito | gelbstichig orange |
| 37 | 6-ß-Sulfatoäthylsulfonyl-2-aminonaphthalin-1-sulfonsäure | 3-Amino-N'-(4"-chlorphenyl)-ureido-benzol-4-sulfonsäure | orange |
| 38 | 2,6-Dibrom-4-ß-sulfato-äthylsulfonyl-anilin | 3-Amino-3'-sulfobenzoyl-amino-benzol-4-sulfonsäure | rotstichig gelb |
| 39 | 6-Vinylsulfonyl-2-amino-benzthiazol | 3-Amino-acetanilid-4-sulfonsäure | braunstichig rot |
| 40 | 8-ß-Sulfatoäthylsulfonyl-2-aminonaphthalin | dito | gelbstichig orange |
| 41 | 4-(ß-Sulfatoäthylsulfonyl-methyl)-anilin | dito | gelb |
| 42 | 3,5-Bis-(ß-sulfatoäthyl-sulfonylmethyl)-4-methyl-anilin | dito | goldgelb |
| 43 | 2,5-Dichlor-4-ß-sulfato-äthylsulfonyl-anilin | 3-Amino-vinylsulfonylamino-benzol-4-sulfonsäure | gelbstichig orange |
| 44 | 2,4-Dimethoxy-5-ß-sulfato-äthylsulfonyl-anilin | 3-Amino-chlorpropionylamino-benzol-4-sulfonsäure | orange |
| 45 | 4-ß-Sulfatoäthylsulfonyl-anilin | 3-Amino-sulfopropionylamino-benzol-4-sulfonsäure | rotstichig gelb |
| 46 | 3-ß-Sulfatoäthylsulfonyl-anilin | 3-Amino-benzoylamino-benzol-4-sulfonsäure | gelb |
| 47 | dito | 3-Amino-ureidobenzol-4-sulfonsäure | gelb |

(Fortsetzung)

| Bsp. | Amin (2) | Verbindung (3) | Farbton |
|---|---|---|---|
| 48 | 3-ß-Sulfatoäthylsulfonyl-anilin | 3-Amino-N'-phenylureido-benzol-4-sulfonsäure | gelb |
| 49 | 2-Methoxy-5-methyl-4-(ß-sulfatoäthylsulfonyl)-anilin | 3-Amino-acetanilid-4-sulfonsäure | gelbstichig orange |
| 50 | dito | 3-Amino-ureidobenzol-4-sulfonsäure | gelbstichig orange |
| 51 | dito | 3-Amino-benzanilid-4-sulfonsäure | gelbstichig orange |
| 52 | 2-Carboxy-5-(ß-sulfato-äthylsulfonyl)-anilin | 3-Amino-acetanilid-4-sulfonsäure | gelbbraun |
| 53 | 4-Methoxy-5-(ß-sulfato-äthylsulfonyl)-anilin | dito | rotstichig gelb |
| 54 | dito | 3-Amino-benzanilid-4-sulfonsäure | rotstichig gelb |
| 55 | 2,4-Dimethoxy-5-(ß-sulfatoäthylsulfonyl)-anilin | 3-Amino-acetanilid-4-sulfonsäure | gelbstichig orange |
| 56 | 2,4-Dimethyl-5-(ß-sulfatoäthylsulfonyl)-anilin | dito | rotstichig gelb |
| 57 | 2-Methoxy-5-chlor-4-(ß-sulfatoäthylsulfonyl)-anilin | dito | gelbstichig orange |
| 58 | dito | 3-Amino-ureidobenzol-4-sulfonsäure | gelbstichig orange |

**Ansprüche**

1. Wasserlösliche Azoverbindungen der allgemeinen Formel (1)

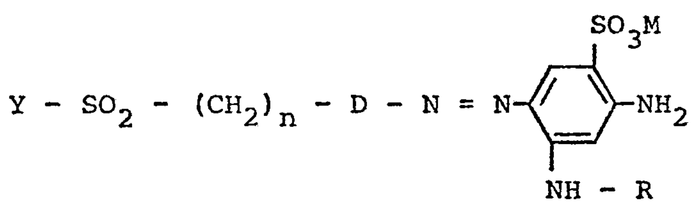

(1)

in welcher bedeuten

D ist der Phenylenrest, der weiterhin durch einen oder zwei Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor und Carboxy und/oder durch eine Nitrogruppe und/oder durch eine weitere Gruppe der Formel $Y{-}SO_2{-}(CH_2)_n{-}$, in welcher Y die nachstehende Bedeutung hat und n die Zahl 1 oder 2 ist, substituiert sein kann, oder

D ist der Naphthylenrest, der weiterhin durch einen oder zwei Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor, Carboxy und Sulfo und/oder durch eine Nitrogruppe substituiert sein kann, oder ist der Benzthiazol-2-yl-Rest, der im carbocyclischen Ring die angegebene Gruppe der Formel $Y—SO_2—(CH_2)_n—$ gebunden enthält und in diesem Benzolkern weiterhin durch einen Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Nitro, Chlor, Brom und Sulfo substituiert sein kann ;

M ist ein Wasserstoffatom oder das Äquivalent eines Metalls ;

R ist der Acylrest einer gegebenenfalls substituierten niederen Alkancarbonsäure, einer gegebenenfalls substituierten niederen Alkencarbonsäure, einer gegebenenfalls substituierten aromatischen Carbonsäure, einer gegebenenfalls substituierten niederen Alkansulfonsäure, einer gegebenenfalls substituierten aromatischen Sulfonsäure oder der gegebenenfalls substituierten Carbaminsäure oder einer niederen Alkensulfonsäure ;

Y ist die Vinylgruppe oder eine Gruppe der Formel $—CH_2—CH_2—Z$, in welcher Z einen anorganischen oder organischen, alkalisch eliminierbaren Rest oder die Hydroxygruppe bedeutet ;

n steht für die Zahl Null, 1 oder 2.

2. Verbindungen nach Anspruch 1 der allgemeinen Formel (1), in welcher D ein Phenylenrest ist, der unsubstituiert oder durch 1 oder 2 Substituenten aus der Gruppe niederes Alkyl, niederes Alkoxy und Chlor oder durch Brom substituiert ist.

3. Verbindungen nach Anspruch 1 der allgemeinen Formel (1), in welcher D ein Naphthylenrest ist, der unsubstituiert oder durch eine oder zwei Sulfogruppen substituiert ist.

4. Verbindungen nach Anspruch 1, 2 oder 3 der allgemeinen Formel (1), in welcher R eine niedere Alkanoylgruppe ist, die durch Chlor, Brom, niederes Alkoxy, Phenoxy, Phenyl, Hydroxy, Carboxy oder Sulfo substituiert sein kann, oder eine niedere Alkenoylgruppe ist, die durch Chlor, Brom, Carboxy oder Sulfo substituiert sein kann, oder eine niedere Alkylsulfonylgruppe ist, die durch hydroxy, Sulfato, Chlor, Brom oder niederes Alkoxy substituiert sein kann, oder die Benzoylgruppe ist, die durch Substituenten aus der Gruppe Chlor, Sulfo, niederes Alkyl, niederes Alkoxy, Hydroxy und Carboxy substituiert sein kann, oder die Phenylsulfonylgruppe ist, die durch Substituenten aus der Gruppe niederes Alkyl, niederes Alkoxy, Chlor, Sulfo und Carboxy substituiert sein kann, oder die Gruppe der Formel $—CO—NH_2$ ist, die am Stickstoffatom durch niederes Alkyl, Cycloalkyl oder durch eine gegebenenfalls substituierte Arylgruppe mono- oder disubstituiert sein kann, oder die Vinylsulfonylgruppe ist.

5. Verbindungen nach Anspruch 1, 2 oder 3, dadurch gekennzeichnet, daß R die Acetyl-, Propionyl- oder Benzoylgruppe ist.

6. Verbindungen nach einem der Ansprüche 1 bis 5, dadurch gekennzeichnet, daß n hier Null ist.

7. Verbindungen nach Anspruch 1 der allgemeinen Formel (1a)

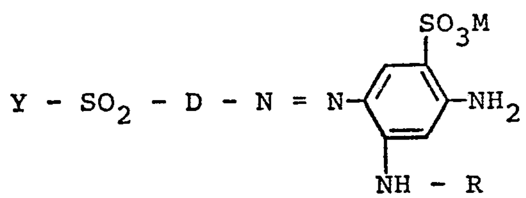

(1a)

in welcher M und Y die in Anspruch 1 genannten Bedeutungen besitzen, R für die Acetyl- oder Propionylgruppe steht und D ein Phenylenrest ist, der durch einen oder zwei Substituenten substituiert sein kann, die aus der Gruppe Methyl, Äthyl, Methoxy, Äthoxy, Chlor und Brom ausgewählt sind, oder den Naphthylenrest bedeutet, der unsubstituiert oder durch eine Sulfogruppe substituiert ist.

8. Verbindungen nach Anspruch 6 oder 7, dadurch gekennzeichnet, daß D hier der p-Phenylenrest ist.

9. Verbindung nach Anspruch 1 der Formel

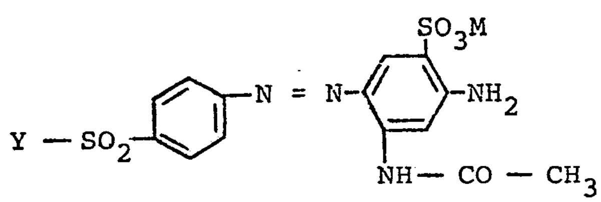

in welcher M und Y die in Anspruch 1 genannten Bedeutungen haben.

10. Verbindung nach Anspruch 1 der Formel

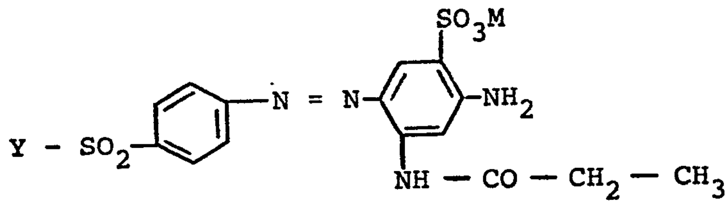

in welcher M und Y die in Anspruch 1 genannten Bedeutungen haben.

11. Verbindungen nach einem der Ansprüche 1 bis 10, dadurch gekennzeichnet, daß Y die Vinylgruppe oder die β-Sulfatoäthyl-Gruppe ist.

12. Verbindungen nach einem der Ansprüche 1 bis 10, dadurch gekennzeichnet, daß Y die β-Sulfatoäthyl-Gruppe ist.

13. Verbindungen nach einem der Ansprüche 1 bis 12, dadurch gekennzeichnet, daß M für Wasserstoff, Natrium oder Kalium steht.

14. Verfahren zur Herstellung der in Anspruch 1 genannten und definierten Azoverbindungen der allgemeinen Formel (1), dadurch gekennzeichnet, daß man eine Verbindung der allgemeinen Formel (2)

$$Y-SO_2-(CH_2)_n-D-NH_2 \quad (2)$$

in welcher D, n und Y die in Anspruch 1 genannten Bedeutungen haben, diazotiert und mit einer Kupplungskomponente der allgemeinen Formel (3)

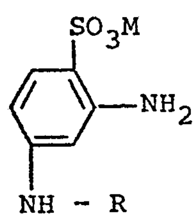

(3)

in welcher R und M die in Anspruch 1 genannten Bedeutungen haben, zu einer Azoverbindung der allgemeinen Formel (1) kuppelt und gegebenenfalls im Falle, daß Y für die β-Hydroxyäthyl-Gruppe steht, die Azoverbindung der Formel (1) mit dieser β-Hydroxyäthylgruppe mit Hilfe eines Sulfatierungsmittels in die entsprechende Azoverbindung der Formel (1), in welcher Y für die β-Sulfatoäthyl-Gruppe steht, oder mit einem Phosphatierungsmittel in die entsprechende Verbindung der Formel (1), in welcher Y für die β-Phosphatoäthyl-Gruppe steht, überführt.

15. Verwendung der in Anspruch 1 genannten und definierten Verbindungen oder der nach Anspruch 14 hergestellten Verbindungen der allgemeinen Formel (1) als Farbstoffe, insbesondere zum Färben von hydroxy- und/oder carbonamidgruppenhaltigem Fasermaterial.

16. Verfahren zum Färben von hydroxy- oder carbonamidgruppenhaltigem Material, bei welchem man einen Farbstoff auf das Material aufbringt oder in das Material einbringt und ihn gegebenenfalls darauf oder darin, gegebenenfalls in der Wärme und/oder in Gegenwart eines säurebindenden Mittels, fixiert, dadurch gekennzeichnet, daß man als Farbstoff eine Verbindung der in Anspruch 1 genannten und definierten allgemeinen Formel (1) einsetzt.

## Claims

1. Water-soluble azo compounds of the general formula (1)

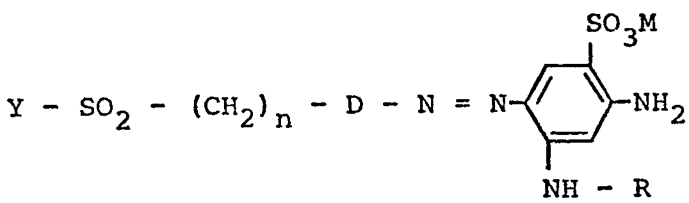

(1)

in which

D is the phenylene radical which can be further substituted by one or two substituents from the group consisting of lower alkyl, lower alkoxy, hydroxy, lower alkanoylamino, benzoylamino, benzoylamino

substituted by lower alkyl, lower alkoxy, chlorine and/or sulfo, chlorine, bromine, fluorine and carboxy and/or by a nitro group and/or by a further group of the formula $Y-SO_2-(CH_2)_n-$ in which Y has the meaning mentioned below and n is the number 1 or 2, or

D is the naphthylene radical which can be further substituted by one or two substituents from the group consisting of lower alkyl, lower alkoxy, hydroxy, lower alkanoylamino, benzoylamino, benzoylamino substituted by lower alkyl, lower alkoxy, chlorine and/or sulfo, chlorine, bromine, fluorine, carboxy and sulfo and/or by a nitro group, or

D is the benzothiazol-2-yl radical which contains the indicated group of the formula $Y-SO_2-(CH_2)_n-$ in the carbocyclic ring and can be further substituted in this benzene nucleus by a substituent from the group consisting of lower alkyl, lower alkoxy, hydroxy, lower alkanoylamino, benzoylamino, benzoylamino substituted by lower alkyl, lower alkoxy, chlorine and/ or sulfo, nitro, chlorine, bromine and sulfo ;

M is a hydrogen atom or the equivalent of a metal ;

R is the acyl radical of an optionally substituted lower alkanecarboxylic acid, of an optionally substituted lower alkenecarboxylic acid, of an optionally substituted aromatic carboxylic acid, of an optionally substituted lower alkanesulfonic acid, of an optionally substituted aromatic sulfonic acid or of the optionally substituted carbamic acid or of a lower alkenesulfonic acid ;

Y is the vinyl group or a group of the formula $-CH_2-CH_2-Z$ in which Z denotes an inorganic or organic radical which can be eliminated under alkaline conditions, or the hydroxy group ;

n represents the number zero, 1 or 2.

2. Compounds according to claim 1, of the general formula (1), in which D is a phenylene radical which is unsubstituted or substituted by 1 or 2 substituents from the group consisting of lower alkyl, lower alkoxy and chlorine, or by bromine.

3. Compounds according to claim 1, of the general formula (1), in which D is a naphthylene radical which is unsubstituted or substituted by one or two sulfo groups.

4. Compounds according to claim 1, 2 or 3, of the general formula (1), in which R is a lower alkanoyl group which can be substituted by chlorine, bromine, lower alkoxy, phenoxy, phenyl, hydroxy, carboxy or sulfo, or is a lower alkenoyl group which can be substituted by chlorine, bromine, carboxy or sulfo, or is a lower alkylsulfonyl group which can be substituted by hydroxy, sulfato, chlorine, bromine or lower alkoxy, or is the benzoyl group which can be substituted by substituents from the group consisting of chlorine, sulfo, lower alkyl, lower alkoxy, hydroxy and carboxy, or is the phenylsulfonyl group which can be substituted by substituents from the group consisting of lower alkyl, lower alkoxy, chlorine, sulfo and carboxy, or is the group of the formula $-CO-NH_2$ which can be monosubstituted or disubstituted at the nitrogen atom by lower alkyl, cycloalkyl or an optionally substituted aryl group, or is the vinylsulfonyl group.

5. Compounds according to claim 1, 2 or 3, characterized by that R is the acetyl, propionyl or benzoyl group.

6. Compounds according to any of claims 1 to 5, characterized by that n in this case is zero.

7. Compounds according to claim 1, of the general formula (1a)

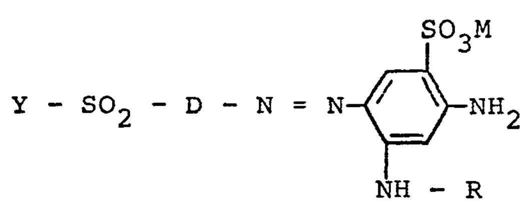

(1a)

in which M and Y have the meanings mentioned in claim 1, R represents the acetyl or propional group and D is a phenylene radical which can be substituted by one or two substituents selected from the group consisting of methyl, ethyl, methoxy, ethoxy, chlorine and bromine, or denotes the naphthylene radical which is unsubstituted or substituted by a sulfo group.

8. Compounds according to claim 6 or 7, characterized by that D is in this case the p-phenylene radical.

9. A compound according to claim 1, of the formula

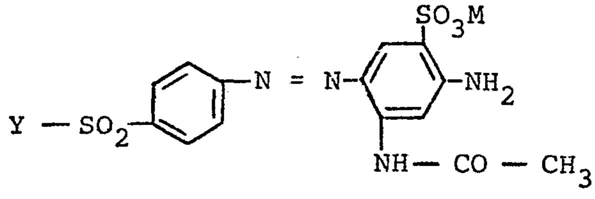

in which M and Y have the meanings mentioned in claim 1.

10. A compound according to claim 1 of the formula

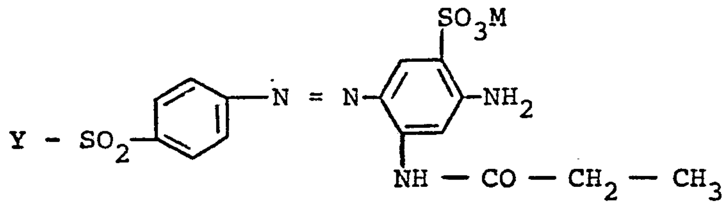

in which M and Y have the meanings mentioned in claim 1.

11. Compounds according to any of claims 1 to 10, characterized by that Y is the vinyl group or the β-sulfatoethyl group.

12. Compounds according to any of claims 1 to 10, characterized by that Y is the β-sulfatoethyl group.

13. Compounds according to any of claims 1 to 12, characterized by that M represents hydrogen, sodium or potassium.

14. A process for the preparation of the azo compounds of the general formula (1) mentioned and defined in claim 1, characterized by that a compound of the general formula (2)

$$Y{-}SO_2{-}(CH_2)_n{-}D{-}NH_2 \qquad (2)$$

in which D, n and Y have the meanings mentioned in claim 1, is diazotized and coupled with a coupling component of the general formula (3)

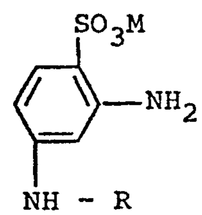

(3)

in which R and M have the meanings mentioned in claim 1, to give an azo compound of the general formula (1), and that, if Y represents the β-hydroxyethyl group, the azo compound of the formula (1) containing this β-hydroxy ethyl group is optionally converted into the corresponding azo compound of the formula (1) in which Y represents the β-sulfatoethyl group with the aid of a sulfating agent or into the corresponding compound of the formula (1) in which Y represents the β-phosphatoethyl group by means of a phosphating agent.

15. The use of the compounds mentioned and defined in claim 1 or of the compound of the general formula (1) prepared in accordance with claim 14, as dyestuffs, in particular for colouring fiber material containing hydroxy and/or carboxamide groups.

16. A process for coloring material containing hydroxy and/or carboxamide groups, in which a dyestuff is applied to the material or incorporated into the material and is optionally fixed on or in this material, optionally by the action of heat and/or in the presence of an acid-binding agent, characterized by that a compound of the general formula (1) mentioned and defined in claim 1, is used as the dyestuff.

**Revendications**

1. Composés azoïques solubles dans l'eau qui répondent à la formule générale (1)

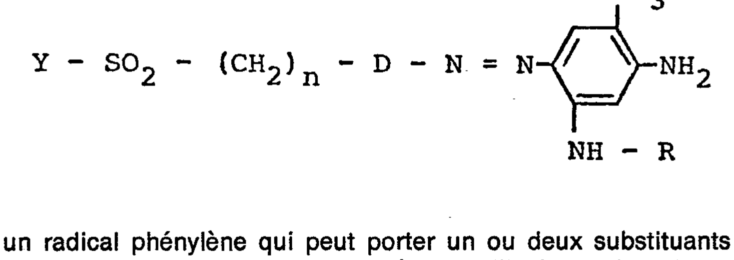

(1)

dans laquelle

D représente un radical phénylène qui peut porter un ou deux substituants pris dans l'ensemble constitué par les alkyles inférieurs, les alcoxy inférieurs, l'hydroxy, les alcanoylamino inférieurs, le benzoylamino, les benzoylamino porteurs d'un alkyle inférieur, d'un alcoxy inférieur, d'un chlore et/ou d'un sulfo, le chlore, le brome, le fluor et le carboxy, et/ou peut porter un radical nitro et/ou un autre

radical $Y—SO_2—(CH_2)_n—$ dans lequel Y a la signification donnée ci-dessous et n désigne ici le nombre 1 ou le nombre 2, ou

D représente un radical naphtylène qui peut en outre porter un ou deux substituants pris dans l'ensemble constitué par les alkyles inférieurs, les alcoxy inférieurs, l'hydroxy, les alcanoylamino inférieurs, le benzoylamino, les benzoylamino porteurs d'un alkyle inférieur, d'un alcoxy inférieur d'un atome de chlore ou d'un sulfo, le chlore, le brome, le fluor, le carboxy et le sulfo, et/ou un radical nitro, ou

D représente un radical benzothiazolyle-2 qui porte sur son noyau carbocyclique le radical $Y—SO_2—(CH_2)_n—$ indiqué et qui porte en outre, sur ce noyau benzénique, un substituant pris dans l'ensemble constitué par les alkyles inférieurs, les alcoxy inférieurs, l'hydroxy, les alcanoylamino inférieurs, le benzoylamino, les benzoylamino porteurs d'un alkyle inférieur, d'un alcoxy inférieur, d'un chlore et/ou d'un sulfo, le nitro, le chlore, le brome et le sulfo,

M représente un atome d'hydrogène ou l'équivalent d'un métal,

R représente le radical acyle d'un acide alcanoïque inférieur éventuellement substitué, d'un acide alcénoïque inférieur éventuellement substitué, d'un acide carboxylique aromatique éventuellement substitué, d'un acide alcane-sulfonique inférieur éventuellement substitué, d'un acide sulfonique aromatique éventuellement substitué, de l'acide carbamique éventuellement substitué ou d'un acide alcène-sulfonique inférieur,

Y représente le radical vinyle ou un radical $—CH_2CH_2—Z$ dans lequel Z désigne un radical minéral ou organique éliminable en milieu alcalin ou le radical hydroxy, et

n représente un nombre égal à zéro, à un ou à deux.

2. Composés de formule générale 1 selon la revendication 1, dans lesquels D représente un radical phénylène qui ne porte pas de substituant, qui porte un ou deux substituants pris dans l'ensemble constitué par les alkyles inférieurs, les alcoxy inférieurs et le chlore, ou qui porte un atome de brome.

3. Composés de formule générale 1 selon la revendication 1, dans lesquels D représente un radical naphtylène qui ne porte pas de substituant ou qui porte un ou deux radicaux sulfo.

4. Composés de formule générale 1 selon l'une quelconque des revendications 1, 2 et 3, dans lesquels R représente un radical alcanoyle inférieur éventuellement porteur d'un atome de chlore, d'un atome de brome, d'un alcoxy inférieur, d'un phénoxy, d'un phényle, d'un hydroxy, d'un carboxy ou d'un sulfo, ou un radical alcénoyle inférieur éventuellement porteur d'un atome de chlore, d'un atome de brome, d'un carboxy ou d'un sulfo, ou un radical alkylsulfonyle inférieur éventuellement porteur d'un hydroxy, d'un sulfato, d'un chlore, d'un brome ou d'un alcoxy inférieur, ou un radical benzoyle éventuellement porteur de substituants pris dans l'ensemble constitué par le chlore, le sulfo, les alkyles inférieurs, les alcoxy inférieurs, l'hydroxy et le carboxy, ou un radical phénylsulfonyle éventuellement porteur de substituants pris dans l'ensemble constitué par les alkyles inférieurs, les alcoxy inférieurs, le chlore, le sulfo et le carboxy, ou un radical $—CO—NH_2$ dont l'atome d'azote peut porter un ou deux substituants pris dans l'ensemble constitué par les alkyles inférieurs, les cycloalkyles et les aryles éventuellement substitués, ou un radical vinylsulfonyle.

5. Composés selon l'une quelconque des revendications 1, 2 et 3, caractérisés en ce que R représente un radical acétyle, propionyle ou benzoyle.

6. Composés selon l'une quelconque des revendications 1 à 5, caractérisés en ce que n est égal à zéro.

7. Composés selon la revendication 1 qui répondent à la formule générale (1a)

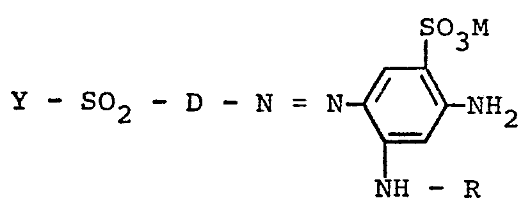

(1a)

dans laquelle M et Y ont les significations données à la revendication 1, R représente un radical acétyle ou propionyle et D représente un radical phénylène éventuellement porteur d'un ou deux substituants pris dans l'ensemble constitué par les radicaux méthyle, éthyle, méthoxy et éthoxy et les atomes de chlore et de brome, ou un radical naphtylène qui ne porte pas de substituant ou qui porte un radical sulfo.

8. Composés selon l'une des revendications 6 et 7, caractérisés en ce que D représente un radical p-phénylène.

9. Composés selon la revendication 1 qui répondent à la formule suivante

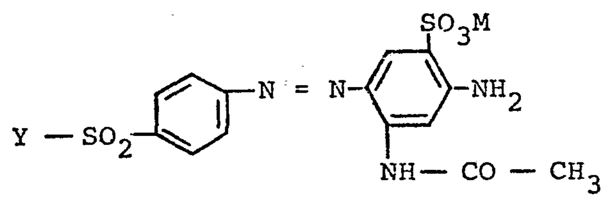

dans laquelle M et Y ont les significations données à la revendication 1.

10. Composés selon la revendication 1 qui répondent à la formule suivante

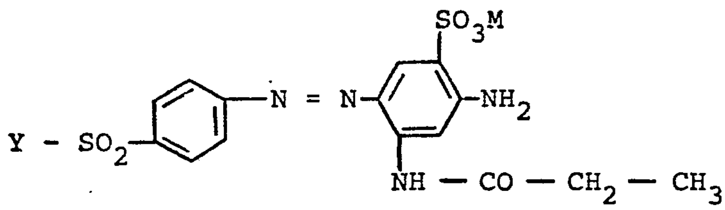

dans laquelle M et Y ont les significations données à la revendication 1.

11. Composés selon l'une quelconque des revendications 1 à 10, caractérisés en ce que Y représente un radical vinyle ou β-sulfatoéthyle.

12. Composés selon l'une quelconque des revendications 1 à 10, caractérisés en ce que Y représente un radical β-sulfatoéthyle.

13. Composés selon l'une quelconque des revendications 1 à 12, caractérisés en ce que M représente l'hydrogène, le sodium ou le potassium.

14. Procédé de préparation des composés azoïques de formule générale 1 qui ont été mentionnés et définis à la revendication 1, procédé caractérisé en ce qu'on diazote un composé répondant à la formule générale (2)

$$Y-SO_2-(CH_2)_n-D-NH_2 \quad (2)$$

dans laquelle D, n et Y ont les significations données à la revendication 1, on copule le diazoïque avec un copulant répondant à la formule générale (3)

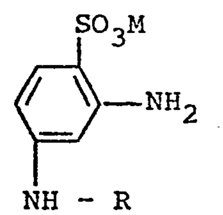

(3)

dans laquelle R et M ont les significations données à la revendication 1, de manière à obtenir un composé azoïque de formule générale 1, et éventuellement, dans le cas où Y représente un radical β-hydroxyéthyle, on transforme le composé azoïque de formule 1 contenant ce radical β-hydroxyéthyle, au moyen d'un agent de sulfatation, en le composé azoïque correspondant de formule 1 dans lequel Y représente un radical β-sulfatoéthyle, ou, au moyen d'un agent de phosphatation, en le composé correspondant de formule 1 dans lequel Y représente un radical β-phosphatoéthyle.

15. Application des composés mentionnés et définis à la revendication 1, ou des composés de formule générale 1 qui ont été préparés selon la revendication 14, comme colorants, plus spécialement pour la teinture de matières fibreuses contenant des radicaux hydroxy et/ou carbamoyles.

16. Procédé pour teindre des matières contenant des radicaux hydroxy ou carbamoyles selon lequel on applique un colorant sur la matière ou on incorpore un colorant dans la matière et on l'y fixe éventuellement, au besoin à chaud et/ou en présence d'un accepteur d'acides, procédé caractérisé en ce qu'on utilise, comme colorant, un composé répondant à la formule générale 1 qui a été mentionnée et définie à la revendication 1.